(19) **Europäisches Patentamt / European Patent Office / Office européen des brevets**

(11) **EP 2 489 133 B1**

(12) **EUROPEAN PATENT SPECIFICATION**

(45) Date of publication and mention
of the grant of the patent:
**09.11.2016 Bulletin 2016/45**

(51) Int Cl.:
*H04B 3/32* (2006.01)      *H04L 25/02* (2006.01)
*H04L 27/26* (2006.01)

(21) Application number: **10740523.5**

(86) International application number:
**PCT/EP2010/004430**

(22) Date of filing: **20.07.2010**

(87) International publication number:
**WO 2011/009593 (27.01.2011 Gazette 2011/04)**

(54) **METHOD AND APPARATUS FOR VECTORED DATA TRANSMISSION**

VERFAHREN UND VORRICHTUNG FÜR GERICHTETE DATENÜBERTRAGUNG

PROCÉDÉ ET DISPOSITIF DE TRANSMISSION DE DONNÉES VECTORISÉE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **20.07.2009 US 226829 P**

(43) Date of publication of application:
**22.08.2012 Bulletin 2012/34**

(73) Proprietor: **Lantiq Deutschland GmbH
85579 Neubiberg (DE)**

(72) Inventors:
• **CLAUSEN, Axel
81739 Muenchen (DE)**

• **OKSMAN, Vladimir
Morganville
NJ 07751 (US)**
• **SCHENK, Heinrich
81476 Muenchen (DE)**

(74) Representative: **Kraus & Weisert
Patentanwälte PartGmbB
Thomas-Wimmer-Ring 15
80539 München (DE)**

(56) References cited:
**EP-A1- 1 300 969        EP-A2- 1 164 758
US-A- 6 137 785         US-A1- 2004 008 760
US-A1- 2005 147 025     US-A1- 2005 175 078**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

So-called vectoring or vectored data transmission is a technique for coordinated transmission or reception of data from a plurality of transmitters to a plurality of receivers via a plurality of communication connections in order to improve the transmission, for example to reduce the influence of crosstalk. Either transmitters or receivers are co-located.

For example, in DSL (digital subscriber line) transmission systems, for example VDSL (very high bit rate DSL) transmission systems, data may be transmitted from a central office (CO) or other provider equipment to a plurality of receivers located in different locations, for example in customer premises (CPE), via a plurality of communication lines. Crosstalk resulting from signals on different lines transmitted in the same direction, also referred to as far end crosstalk (FEXT), may result in a reduced data throughput. Through vectoring, signals transmitted over the plurality of communication lines from the central office or received via the plurality of communication lines in the central office may be processed jointly in order to reduce such crosstalk, which joint processing corresponds to the above-mentioned vectoring. In this respect, the reduction of crosstalk by coordinated transmission of signals is sometimes referred to as crosstalk precompensation, whereas the reduction of crosstalk through joint processing of the received signals is sometimes referred to as crosstalk cancellation. The communication connections which are processed jointly are sometimes referred to as vectored group.

Both at the initialization of communication and during communication, it may be necessary to add an additional communication connection to the vectored group, for example when an additional user of a DSL service becomes active. In such a case, it is desirable to determine the crosstalk coupling between the communication connection to be added to the vectored group and the communication connections in the vectored groups. To this end, usually predefined sequences, for example sequences of pilot signals or training signals are transmitted via the communication connections, and the received signals are compared to the sent signals to determine an error signal. The crosstalk coupling between the communication connections are then determines based on these errors.

For very large systems comprising many communication connections, this determination is computationally complex, i.e. requires many individual calculation operations, and may take a considerable amount of time as long sequences may have to be used for training.

US 2004/0008760 A1 discloses a base station to use a cyclically shifted version of its core training sequence for the training segment of signals sent to a particular user terminal. The user terminal is assigned to a spatial channel, and the spatial channel number determines the magnitude of the cyclic shift, so that each user terminal sharing a conventional channel to communicate with the base station uses a different shifted version of one core training sequence.

US 2005/0175078 A1 discloses a communication system initialized using an iterative training portion. The communication system comprises a first transceiver and a second transceiver operable to communicate with the first transceiver. The first and the second transceivers are operable to perform a training portion, the first and second transceivers negotiating a plurality of iterations of the training portion. The first transceiver may have a pseudo-random binary sequence PRBS parameter to identify one or more pseudo-random binary sequences which may be transmitted during the training portion. The signal sequences include a first signal sequence transmitted by the first transceiver and a second signal sequence transmitted by the second transceiver.

The independent claims define the invention in various aspects. The dependent claims define embodiments of the invention.

BRIEF DESCRIPTION OF THE SEVERAL VIEWS OF THE DRAWINGS

A detailed description is provide below with reference to the accompanying figures of which:

Fig. 1 shows a communication system according to an embodiment of the present invention,
Fig. 2 shows portions of a communication system according to an embodiment of the present invention,
Fig. 3 shows a flow diagram of a method according to an embodiment of the present invention,
Fig. 4 shows an explanatory diagram for illustrating some features of some embodiments of the present invention,
Fig. 5 shows a block diagram of a communication system according to an embodiment of the present invention,
Fig. 6 shows a block diagram of the communication system of Fig. 5 operated in a different transmission direction,
Fig. 7 shows a flow diagram of a method according to an embodiment of the present invention,
Fig. 8 shows a diagram for explaining some features of some embodiments,
Fig. 9 shows a further diagram for explaining some features of some embodiments,
Fig. 10 shows a diagram for illustrating some features or some embodiments of the present invention, and
Fig. 11 shows simulation results for some implementations of embodiments of the present invention.

DETAILED DESCRIPTION OF THE INVENTION

In the following, some embodiments of the present invention will be described in detail. It is to be understood that the following description is given only for the purpose of illustration and is not to be taken in a limiting sense. The scope of the invention is not intended to be limited by the embodiments described hereinafter with reference to the accompanying drawings, but is to be intended only to be limited by the appended claims.

It is also to be understood that in the following description of embodiments any direct connection or coupling between functional blocks, devices, components, circuit elements or other physical or functional units shown in the drawings or described herein could also be implemented by an indirect connection or coupling. Furthermore, it should appreciated that functional blocks or units shown in the drawings may be implemented as separate circuits in embodiments, but may also be fully or partially implemented in a common circuit in other embodiments. It is further to be understood that any connection which is described as being wire-based in the following specification may also be implemented as a wireless communication unless noted to the contrary.

It should be noted that the drawings are provided to give an illustration of some aspects of embodiments of the present invention and therefore are to be regarded as schematic only. In particular, the elements shown in the drawings are not necessary to scale with each other, and the placement of various elements in the drawings is chosen to provide a clear understanding of the respective embodiment and is not to be construed as necessarily being a representation of the actual relative locations of the various components in implementations according to an embodiment of the invention.

The features of the various embodiments described herein may be combined with each other unless specifically noted otherwise.

The term "communication connection" as used herein is intended to refer to any kind of communication connection including wire-based communication connections and wireless communication connections.

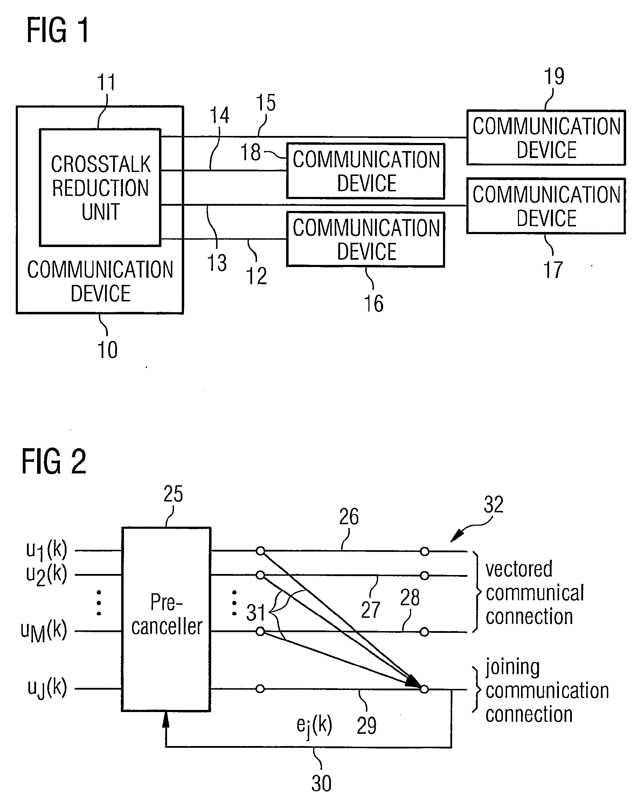

In Fig. 1, a communication system according to an embodiment of the present invention is schematically shown.

In the communication system of Fig. 1, a communication device 10 communicates with communication devices 16, 17, 18 and 19 via respective communication connections 12, 13, 14 and 15. While in Fig. 1 four communication devices 16, 17, 18 and 19 are shown, in other embodiments any suitable other number of communication devices may also be provided.

In an embodiment, the communication via communication connections 12, 13, 14 and 15 is a bidirectional communication. In such an embodiment, communication device 10 may comprise a transceiver for each of the communication connections 12, 13, 14 and 15, and each communication device 16, 17, 18 and 19 also may comprise a transceiver. In another embodiment, all or some of communication connections 12, 13, 14 and 15 may be unidirectional communication connections. In another embodiment, all or some of the communication devices 16, 17, 18, 19 might be co-located.

In the embodiment of Fig. 1, couplings between the communication connections 12-15 may cause crosstalk, for example if some or all of the communication connections are wire lines running close to each other. Through at least partial joint processing of the signals transmitted from communication device 10 to communication device 16, 17, 18 and 19 and through at least partial joint processing of signals received from communication devices 16, 17, 18 and 19 at communication device 10 in a crosstalk reduction unit 11, the influence of such crosstalk may be reduced. As already mentioned, the joint processing for crosstalk reduction is also referred to as vectoring, and the communication connections which are subjected to such a crosstalk reduction are also referred to as vectored group.

In the following, the transmission direction from communication device 10 to communication devices 16, 17, 18 and 19 will be referred to as downstream direction, and the opposite transmission direction from communication devices 16, 17, 18 and 19 to communication device 10 will be referred to as upstream direction. Reduction of crosstalk in the downstream direction is also referred to as crosstalk precompensation since the signals transmitted are modified before transmission, i.e. before the actual crosstalk occurs, whereas the reduction of crosstalk in the upstream direction is also referred to as crosstalk cancellation as here through joint processing in crosstalk reduction unit 11 the crosstalk is reduced or cancelled after it has occurred.

In embodiments, crosstalk cancellation may for example be performed by calculating received signals for each communication connection depending on a linear combination of all received signals on all communication connections of the vectored group, and crosstalk precompensation may be performed by calculating signals to be transmitted via each communication connection depending on a linear combination of signals to be transmitted on all communication connections. However, other calculation methods, for example non-linear calculations, are also possible.

In order to perform this crosstalk reduction, i.e. the vectoring, the crosstalk reduction unit 11 has to be "trained", i.e. the crosstalk reduction unit 11 needs information regarding the actual crosstalk occurring between the communication connections in the vectored group for example in the form of coupling coefficients. This may for example be achieved by transmitting predetermined pilot signals for performing the training, which may also referred to as training signals, via the communication connections and analyzing the received signals to determine the crosstalk. It should be noted that these pilot signals may not only be transmitted during dedicated training phases, but also during regular data

traintransmission. In this respect, the terms training and adapting are used synonymously herein and may be used to refer to a training for initialization purposes, for example when a communication connection joins a vectored group, a training during data transmission to account e.g. for changes in crosstalk or both. In embodiments, data transmission via the communication connections comprises the transmission of pilot signals or symbols, wherein between the pilot signals other data like payload data may be transmitted. In an embodiment, the pilot signals or modified pilot signals are used for training crosstalk reduction unit 11. In an embodiment, synchronization signals or synchronization symbols may be used as pilot signals.

In a communication system like the one shown in Fig. 1, the situation may occur that a communication connection is to be added to the vectored group. For example, in the embodiment of Fig. 1 initially only communication connections 12, 13 and 14 may be included in the vectored group, while communication connection 15 may be inactive (for example communication device 19 may be switched off) and therefore not be added to the vectored group. When communication device 19 becomes active, in order to also reduce the crosstalk between communication connection 15 and communication connections 12-14 which already are incorporated in the vectored group, communication connection 15 is to be added to the vectored group. For such an additional communication connection to be added, crosstalk reduction unit 11 has to be trained and adapted accordingly. It should be noted that also at the initialization or start-up of the system the vectored group may be "built" by adding one communication connection after the other.

In an embodiment, for adding an additional communication connection (like communication connection 15 in the above example) to a vectored group, a first vector training is performed to reduce or cancel the crosstalk resulting from the influence of the communication connection to be added, hereinafter also referred to as the joining connection, to the communication connections already in the vectored group. When this first vector training is completed, the influence of data transmitted over the joining connection on the data transmission of the connections already in the vectored group is minimized or at least reduced by an adaptation of the crosstalk reduction coefficients of the connections already in the vectored group in crosstalk reduction unit 11 of the embodiment of Fig. 1.

Some time but not necessarily immediately after this first vector training, in the currently discussed embodiment a second vector training is performed to adapt the vectoring to reduce or cancel crosstalk resulting from the influence of the communication connections of the vectored group to the joining communication connection.

In one embodiment, which may be combined with the aforementioned embodiments, but also used separately, the vector training is generally performed using modified non-payload data carrying signals like pilot symbols or pilot signals as mentioned above. For example, synchronization symbols used in a standardized communication method like VDSL to synchronize super frames may be multiplied with sequences of +1 and -1, the sequences of the different channels being chosen such that they are orthogonal to form pilot symbols. For example, Walsh-Hadamard sequences may be used as the modulation sequence.

In some embodiments, when the above-mentioned pilot signals are received via the communication connections, an error is determined representing a difference between the sent communication signals (which are known) and the received communication signals. Based on this error, the crosstalk coupling coefficients, in the following also referred to as FEXT coupling coefficients, can be determined.

This will be explained further with respect to Fig. 2, which shows a communication system according to an embodiment which is active in the downstream direction. Fig. 2 shows the situation during the above-mentioned second vector training, i.e. a training phase where the crosstalk from the communication connection already in the vectored group to the joining communication connection, i.e. the communication connection to be added to the vectored group, is reduced through crosstalk precancellation. In particular, Fig. 2 schematically shows the second vector training in the downstream direction.

In Fig. 2, communication connections 26-29 are shown, wherein communication connections 26-28 are already in the vectored group and communication connection 29 is a joining communication connection, i.e. is to be added to the vectored group. In the second vector training phase, crosstalk from communication connections 26-28 to joining communication connection 29 is to be cancelled, said crosstalk being indicated by arrows 31 in Fig. 2. To adapt a precanceller 25, pilot signals $u_1(k)$ to $u_M(k)$ and $u_j(k)$ are transmitted from an upstream end where precanceller 25 is located, e.g. a central office, to a downstream end 32 of communication connections 26-29.

While three communication connections 26-28 are shown in the vectored group, they represent any arbitrary number of connections, which also may mean only a single connection, but on the other hand may also mean some ten or even some hundred connections. Generally, the number of communication connections already in the vectored group will be designated with M in the following.

The index of $u_1(k)$ to $u_M(k)$ designates the number of the vectored communication connection on which the respective pilot signal is sent and runs from 1 to M. The index j indicates the pilot signals sent on the joining communication connection. k represents a time index, i.e. first $u_n(1)$ is sent, then $u_n(2)$ is sent etc. n in this respect is selected from 1 to M and j and designates, as explained above, the communication connection.

At a downstream end of the joining communication connection 29, an error signal $e_j(k)$ is calculated which indicates a difference, e.g. a sign of a difference and/or a magnitude of a difference, between the sent pilot signal $u_j(k)$

and the correspondingly received signal at the downstream end. This error signal $e_j(k)$ is then sent back to precanceller 25, for example via a backchannel on communication connection 29, and is used to adapt the vectoring of precanceller 25 to reduce the crosstalk indicated by arrows 31.

To achieve this, in an embodiment crosstalk coupling coefficients between the vectored communication connections and the joining communication connections are estimated. The crosstalk coupling coefficient between the n-th vectored communication connection, n ranging from 1-M, and the joining communication connection will be labeled $FEXT_{n \to j}$ in the following. Therefore, in such an embodiment M coefficients have to be estimated. Correspondingly, M error values $e_j$ are needed which in an embodiment are determined by transmitting a sequence of pilot signals on each of the communication signals which has a length of at least M sequence elements.

The relationship between M consecutive error values $e_j$, corresponding pilot signals and the FEXT coupling coefficients can be expressed as follows:

$$\begin{bmatrix} e_j(k) \\ e_j(k+1) \\ \vdots \\ e_j(k+M-1) \end{bmatrix} = \begin{bmatrix} u_1(k) & u_2(k) & \cdots & u_M(k) \\ u_1(k+1) & u_2(k+1) & \cdots & u_M(k+1) \\ \vdots & \vdots & \ddots & \vdots \\ u_1(k+M-1) & u_2(k+M-1) & \cdots & u_M(k+M-1) \end{bmatrix} \cdot \begin{bmatrix} FEXT_{1 \to j} \\ FEXT_{2 \to j} \\ \vdots \\ FEXT_{M \to j} \end{bmatrix} \qquad (1)$$

The above equation (1) is essentially exact if no additive noise is present in the system. With the presence of noise, the above equation (1) is an approximation and may serve to approximately determine, i.e. estimate, the FEXT coefficients $FEXT_{n \to j}$; n = 1...M.

The above equation, for simplicity of notation, may be written in vector form:

$$\mathbf{e_j} = \mathbf{U} \cdot \mathbf{FEXT} \qquad (2)$$

wherein $\mathbf{e_j}$ vector of equation (1) comprising the error values, $\mathbf{U}$ is the matrix comprising the signal values u and $\mathbf{FEXT}$ is the vector comprising the values $FEXT_{n \to j}$.

By choosing the pilot signals such that $\mathbf{U}$ is not a singular quadratic matrix, the vector $\mathbf{FEXT}$ can then be estimated by

$$\mathbf{FEXT} = [\mathbf{U}]^{-1} \cdot \mathbf{e_j} \qquad (3)$$

wherein $[]^{-1}$ denotes the matrix inversion operation.

In the above equations, it can be seen that sequences of pilot signals u of a length M are used. It should be noted that also a length exceeding M may be used, wherein the values exceeding M may be ignored or be accommodated by using additional "virtual" lines with FEXT coupling coefficients of zero.

In an embodiment, the sequences of pilot signals for different communication connections are orthogonal to each other. This may for example be achieved by multiplying a fixed signal value, for example a fixed signal constellation, with orthogonal sequences of +1 and -1 to obtain the actually transmitted sequences. As an example, so-called Walsh-Hadamard sequences may be used as orthogonal sequences of +1 and -1.

A Walsh-Hadamard matrix of size 2n $\mathbf{W_{2n}}$, n being an integer equal to or greater than one, is defined as

$$\mathbf{W_{2 \cdot n}} = \begin{bmatrix} \mathbf{W_n} & \mathbf{W_n} \\ \mathbf{W_n} & -\mathbf{W_n} \end{bmatrix} \qquad (4)$$

wherein, to obtain a sequence of 1 and -1 as described above, for example

$$\mathbf{W_1} = \begin{bmatrix} 1 \end{bmatrix} \qquad (5)$$

may be used. Starting with equation (5), Walsh-Hadamard matrixes of any desired size 2n may then be calculated

recursively. For example

$$\mathbf{W}_2 = \begin{bmatrix} 1 & 1 \\ 1 & -1 \end{bmatrix} \qquad (6)$$

$$\mathbf{W}_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \qquad (7)$$

The values of one row may then be used in the above-described manner to determine an orthogonal sequence for a specific communication connection. For example, in a system with all together four lines, based on equation (7) the first row, i.e. 1, 1, 1, 1, may be used as a sequence for the first communication connection, the second row, i.e. 1, -1, 1, -1, may be used as a sequence for the second communication connection, the third row, i.e. 1, 1, -1, -1, may be used for the third communication connection and the fourth row, i.e. 1, -1, -1, 1, may be used for the fourth communication connection.

The Walsh-Hadamard matrix is symmetric and orthogonal, which means that $\mathbf{W}_n\text{-}\mathbf{W}_n$ is a diagonal matrix with n as diagonal elements.

When sequences of length n based on a Walsh-Hadamard matrix $W_n$, and if as pilot signals fixed, for example fixed complex, data symbols $u_0$ are used, equation (3) may be rewritten as

$$\mathbf{FEXT} = \frac{1}{u_0} \left[ \mathbf{W}_n \right]^{-1} \cdot \mathbf{e}_j \qquad (8)$$

Using the above-described properties of the Walsh-Hadamard matrix (orthogonality and symmetry) equation (8) may also be written as

$$\mathbf{FEXT} = \frac{1}{u_0} \left( \frac{1}{n} \cdot \mathbf{W}_n \right) \cdot \mathbf{e}_j \qquad (9)$$

As mentioned above, the length of the orthogonal sequence, i.e. n, in the currently discussed embodiments is greater or equal to the number of lines M involved.

As $u_0$, which for example may be set to the complex value of 1+j, j being the imaginary unit, is simply a constant, it will be omitted in the following explanations for simplicity of notation.

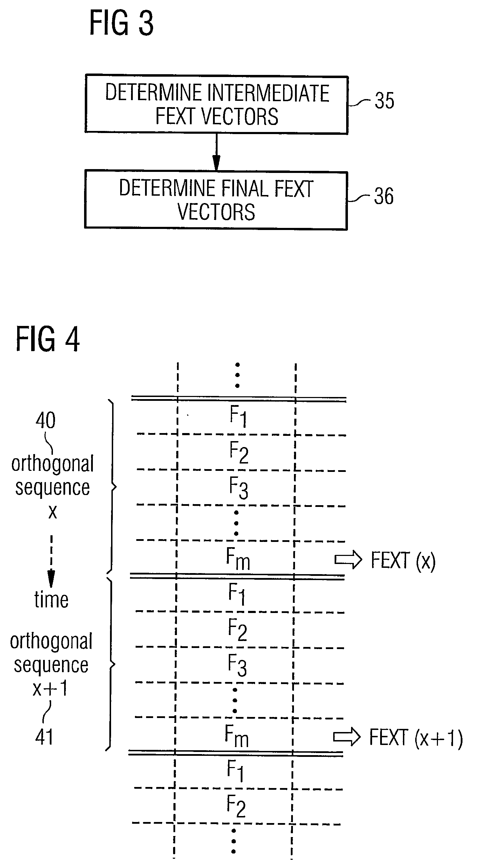

For large values of n, equation (9) requires a correspondingly large number of multiplication and addition operations for multiplying the matrix $\mathbf{W}_n$ with the vector $\mathbf{e}_j$. In the following, some embodiments will be described where the number of such computing operations is reduced. Such an embodiment will be described with reference to Fig. 3.

Instead of directly determining the vector **FEXT**, i.e. the FEXT coupling coefficients, at 35 intermediate FEXT vectors are calculated. The intermediate FEXT vectors in an embodiment have a number of components less than the number of FEXT coefficients to be determined, the components of the intermediate FEXT vectors being linear combinations of components of the vector **FEXT**. At 36 the final FEXT vector **FEXT** comprising the FEXT coupling coefficients is then determined based on the intermediate FEXT vectors. An example for this procedure will be given in the following, wherein it should be noted that the embodiment of Fig. 3 is not limited to the examples given below, but the examples are merely given to illustrate the embodiment of Fig. 3 further.

In the following example, it is assumed that n=M, i.e. the Walsh-Hadamard matrix size corresponds to the number of active lines. As mentioned above, the case of n>M may simply be treated by introducing virtual lines in an embodiment. In an embodiment, n may be a power of 2, for example $2^P$, p being a positive integer.

As an example, two intermediate FEXT vectors $\mathbf{F}_1, \mathbf{F}_2$ as follows may be used:

$$\mathbf{F}_1 = \begin{bmatrix} \text{FEXT}_{1\to j} + \text{FEXT}_{\frac{n}{2}+1\to j} \\ \text{FEXT}_{2\to j} + \text{FEXT}_{\frac{n}{2}+2\to j} \\ \vdots \\ \text{FEXT}_{\frac{n}{2}\to j} + \text{FEXT}_{n\to j} \end{bmatrix} \qquad (10)$$

$$\mathbf{F}_2 = \begin{bmatrix} \text{FEXT}_{1\to j} - \text{FEXT}_{\frac{n}{2}+1\to j} \\ \text{FEXT}_{2\to j} - \text{FEXT}_{\frac{n}{2}+2\to j} \\ \vdots \\ \text{FEXT}_{\frac{n}{2}\to j} - \text{FEXT}_{n\to j} \end{bmatrix} \qquad (11)$$

As can be seen, the intermediate vector $\mathbf{F}_1$ has as components sums of the components of the vector **FEXT,** and the vector $\mathbf{F}_2$ differences of components of **FEXT** as components. The length of each of the two intermediate vectors $\mathbf{F}_1$, $\mathbf{F}_2$, i.e. the number of components, is half the number of components of the vector **FEXT.**

After determining the error values, i.e. the error value $e_j$, as described above, $\mathbf{F}_1$ and $\mathbf{F}_2$ may be determined according to:

$$\mathbf{F}_1 = \left(\frac{2}{n} \cdot \mathbf{W}_{\frac{n}{2}}\right) \cdot \begin{bmatrix} e_j(k) \\ e_j(k+1) \\ e_j\left(k+\frac{n}{2}-1\right) \end{bmatrix} = \left(\frac{2}{n} \cdot \mathbf{W}_{\frac{n}{2}}\right) \cdot \mathbf{e}_1 \qquad (12)$$

$$\mathbf{F}_2 = \left(\frac{2}{n} \cdot \mathbf{W}_{\frac{n}{2}}\right) \cdot \begin{bmatrix} e_j(k+\frac{n}{2}) \\ e_j(k+\frac{n}{2}+1) \\ e_j(k+n-1) \end{bmatrix} = \left(\frac{2}{n} \cdot \mathbf{W}_{\frac{n}{2}}\right) \cdot \mathbf{e}_2 \qquad (13)$$

In the above equations (12) and (13), $\mathbf{e}_1$ represents the first half, i.e. the first n/2 components of the vector $\mathbf{e}_j$, and $\mathbf{e}_2$ represents the second half of components. As can be seen from equations (12) and (13), only the matrix $\mathbf{W}_n/2$, i.e. the first quarter of the original (n·n) Walsh-Hadamard matrix is used (see equation (4)).

The FEXT coupling coefficients FEXT may then be determined according to

$$\begin{bmatrix} \text{FEXT}_{1\to j} \\ \text{FEXT}_{2\to j} \\ \vdots \\ \text{FEXT}_{\frac{n}{2}\to j} \end{bmatrix} = \frac{1}{2} \cdot (\mathbf{F}_1 + \mathbf{F}_2) = \frac{1}{n} \cdot \mathbf{W}_{\frac{n}{2}} \cdot (\mathbf{e}_1 + \mathbf{e}_2) \qquad (14)$$

$$\begin{bmatrix} FEXT_{\frac{n}{2}+1\to j} \\ FEXT_{\frac{n}{2}+2\to j} \\ \vdots \\ FEXT_{n\to j} \end{bmatrix} = \frac{1}{2}\cdot\left(\mathbf{F}_1 - \mathbf{F}_2\right) = \frac{1}{n}\cdot\mathbf{W}_{\frac{n}{2}}\cdot\left(\mathbf{e}_1 - \mathbf{e}_2\right)$$
(15),

wherein with equation (14) the first half of the components of the vector **FEXT** are determined and with equation (15) the second half of the components are determined. By using the calculation according to equations (12)-(15), the number of arithmetic operations may be reduced compared to equation (9).

It should be noted that the usage of two intermediate vectors $\mathbf{F}_1$ and $\mathbf{F}_2$ is only an example. In other embodiments, generally m intermediate vectors can be used, wherein m may be a power of 2, i.e. $m=2^x$ with x being an integer number, and m<n (n being the size of the Walsh-Hadamard matrix which may be equal to or greater than M, i.e. the number of lines in the vectored group, as explained above).

Each of such m intermediate vectors may be determined by using m of the total n error value described above, i.e. $\mathbf{F}_1$ may be determined by using the first n/m error values, $\mathbf{F}_2$ may be determined by using the second n/m error values, etc, according to:

$$\mathbf{F}_1 = \frac{m}{n}\cdot\mathbf{W}_{\frac{n}{m}}\cdot\mathbf{e}_{j,1}$$
(16)

$$\mathbf{F}_2 = \frac{m}{n}\cdot\mathbf{W}_{\frac{n}{m}}\cdot\mathbf{e}_{j,2}$$
(17)

$$\vdots$$

$$\mathbf{F}_m = \frac{m}{n}\cdot\mathbf{W}_{\frac{n}{m}}\cdot\mathbf{e}_{j,m}$$
(18)

In equations (16)-(18), $\mathbf{e}_{j,1}$ contains the first n/m values of the vector $\mathbf{e}_j$, $\mathbf{e}_{j,2}$ contains the second n/m values of the vector $\mathbf{e}_j$ etc. until $\mathbf{e}_{j,m}$ contains the last n/m values of the vector $\mathbf{e}_j$.

As can be seen, for the above calculations only a Walsh-Hadamard matrix of size $(n/m)\cdot(n/m)$ needs to be used instead of the full $n\cdot n$ Walsh-Hadamard matrix.

The values of the vector **FEXT** may then again be calculated by linear combinations of the intermediate vectors, in the above example according to:

$$\begin{bmatrix} FEXT_{1\to j} \\ FEXT_{2\to j} \\ \vdots \\ FEXT_{\frac{n}{m}\to j} \end{bmatrix} = \frac{1}{m}\left(\mathbf{F}_1 + \mathbf{F}_2 + \cdots + \mathbf{F}_m\right)$$
(19)

$$\begin{bmatrix} FEXT_{\frac{n}{m}+1 \to j} \\ FEXT_{\frac{n}{m}+2 \to j} \\ \vdots \\ FEXT_{2\frac{n}{m} \to j} \end{bmatrix} = \frac{1}{m}\left(\mathbf{F}_1 - \mathbf{F}_2 + \cdots - \mathbf{F}_m\right) \qquad (20)$$

The signs in the linear combinations of the intermediate vectors **F** in equations (19) and (20) in this embodiment are given according to the signs in the rows (or columns) of a Walsh-Hadamard matrix $W_m$. For example, if m=4, according to equation (7) for determining the first n/4 components of the vector **FEXT** only + would be used as sign, for the second n/m component +, -, +, - would be used as signs, for the third n/m component +, +, -, - would be used as signs, and for the fourth n/4 components +, -, -, + would be used as signs.

It should be noted that the above calculations only serve as an example. For example, while Walsh-Hadamard matrixes may be used for determining orthogonal sequences and also for determining the signs of the linear combinations of the intermediate vectors as explained above, other orthogonal or non-orthogonal sequences of pilot signals may be used, and the signs may then be adapted accordingly.

The vectors **F** may be determined sequentially in an embodiment according to the availability of the respective components of $\mathbf{e}_j$ which, as can be seen from equation (1), become available one after the other. This is schematically shown in Fig. 4.

In Fig. 4, in the course of a first orthogonal sequence labeled x the vectors $\mathbf{F}_1$ to $\mathbf{F}_m$ are determined sequentially, and as soon as all these vectors are available the corresponding vector **FEXT** based on the sequence x, in Fig. 4 labeled **FEXT(x)** is determined. After that, the orthogonal sequence is repeated (labeled 41 in Fig. 4), i.e. after sequence x sequence x+1 follows, and the procedure is repeated. In other words, the vector **FEXT** may be determined several times to increase accuracy. For example, with each determination of the vector **FEXT** coefficients $\mathbf{C}_{\to j}$ for precompensating crosstalk from lines in the vectored group to a joining line may be adapted according to

$$\mathbf{C}_{\to j}(\text{new}) = \mathbf{C}_{\to j}(\text{old}) - g \cdot \mathbf{FEXT} \qquad (21)$$

g is a step size, which for the first iteration, i.e. the first determined vector **FEXT,** may be set to 1 and then may be reduced for each iteration.

With some of the above-described embodiments, the computational complexity required for calculating FEXT coupling coefficients may be reduced. With some other embodiments which will be explained in the following in more detail, a FEXT vector may already estimated before the completion of an orthogonal sequence. These embodiments may be used in combination with the afore-described embodiments, but the different embodiments may also be used independently from each other.

In particular, in the following embodiments will be described where on each communication connection several communication channels are used for transmitting data. As an example, in DSL systems on each communication line data is transmitted via a plurality of carriers, i.e. frequencies, these carriers also being referred to as tones and being examples for communication channels on a single communication connection. In some of the embodiments described below, each communication channel on a communication connection essentially uses the same orthogonal sequence, but the orthogonal sequences in different channels are shifted with respect to each other.

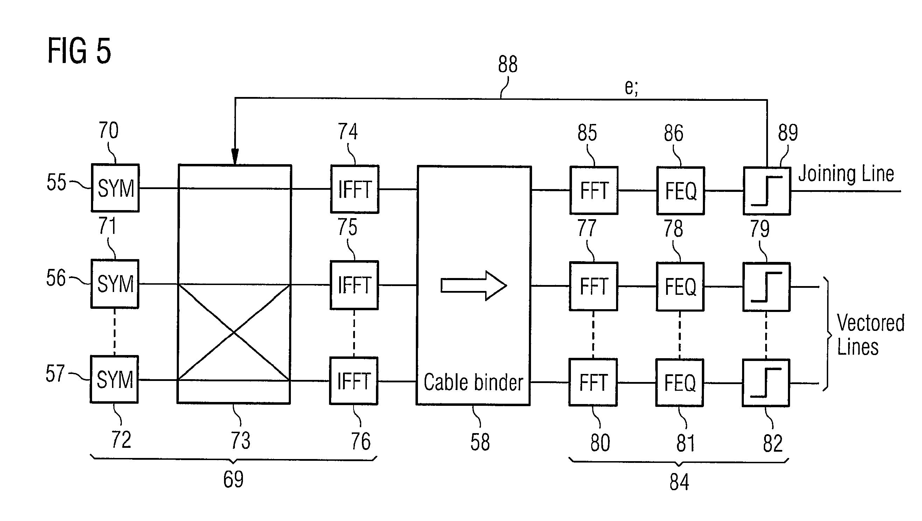

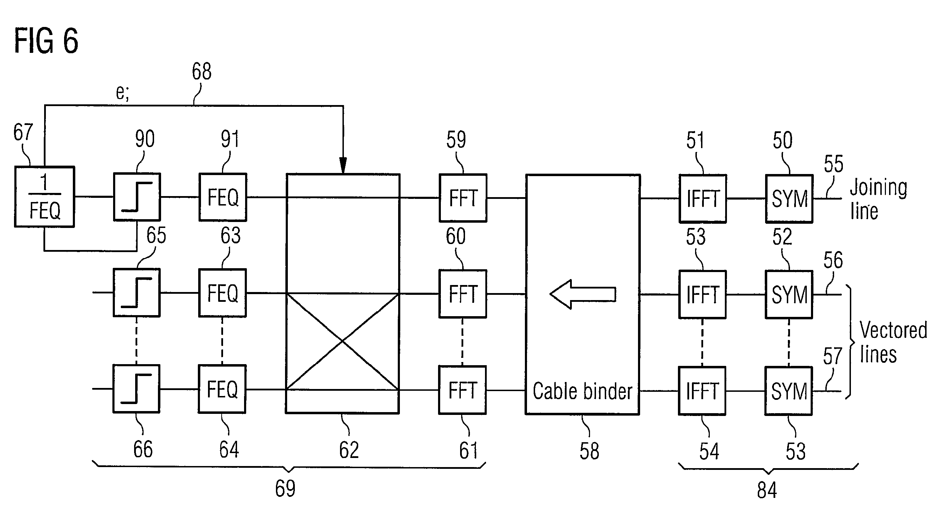

Such an embodiment may for example be implemented in a DSL system. An example for the implementation of such a DSL system will now be given referring to Figs. 5 and 6, Fig. 5 showing a DSL communication system in the downstream direction, while Fig. 6 shows a DSL communication system in the upstream direction.

In Fig. 5, a DSL communication system according to an embodiment of the present invention is shown transmitting data in the downstream direction. In the system shown in Fig.5, data is transmitted from a central office 69 via a plurality of communication lines 55, 56, 57 to a plurality of receivers in customer premises generally labeled 84. In the system of Fig. 5, the communication lines are joined in a so-called cable binder 58. Communication lines in a cable binder are usually located comparatively close to each other and are therefore prone to crosstalk. In the system shown in Fig. 5, communication lines 56 and 57 as well as further (not shown) communication line indicated by dotted lines are already incorporated in the vectored group. It should be noted that the number of communication lines in a vectored group is not limited to any particular number. Communication line 55 in the example shown is a joining line, i.e. is to be added to the vectored group.

In the system of Fig. 4, symbol mappers denoted with reference numerals 70, 71 and 72 map data, e.g. payload or training or pilot data, onto carrier constellations which are to be transmitted via communication lines 55, 56 and 57, respectively. A crosstalk precompensator 73 modifies these symbol mappings in order to precompensate crosstalk occurring during the transmission. The such modified carrier mappings are modulated onto a plurality of carriers for each communication line, said carriers having different frequencies and being an example for a plurality of communication channels on a single communication connection, and are then transferred into signals in the time domain by inverse fast Fourier transformations 74, 75 and 76, respectively. This type of modulation, also referred to as discrete multi tone modulation (DMT) is commonly used in DSL systems like VDSL systems or VDSL2 systems. The such generated signals are then transmitted via the communication line to the customer premises. The received signals are then converted into the frequency domain by fast Fourier transformers 77, 80 and 85, respectively and equalized by frequency equalizers 78, 81 and 86, respectively before slicers 79, 82 and 89, respectively output received constellations which, in case of an error-free transmission, correspond to input constellations generated in 70, 71, 72 originally intended for transmission. It is to be understood that for clarity's sake only some elements of the communication devices involved are shown, and further devices like amplifiers, sampling units and the like may be present.

In a vector training shown in Fig. 5, crosstalk from the lines already in the vectored group like lines 56 and 57 to the joining line is to be reduced. In another phase, for example a previous phase, the crosstalk from the joining line to the lines already in the vectored group may be reduced.

As already mentioned, for adapting the vectoring which is implemented in this case by crosstalk precompensator 73 to the joining line, synchronization symbols transmitted are modified to form orthogonal pilot sequences. The synchronization symbols on all the lines are sent in a synchronized manner, i.e. at the same time.

In an embodiment, a specific sequence is reserved for joining lines. For example, using the Walsh-Hadamard sequences described above multiplying the synchronization symbols with sequences of +1 and -1 described above, a sequence consisting only of +1 values or of alternating +1 and -1 values may be reserved for joining lines.

Via a respective backchannel in the joining line, an error signal $e_j$ is transmitted back to crosstalk precompensator 73. Error signal $e_j$ as described above for the synchronization symbols is indicative of a difference between the synchronization symbols sent (which are known to the receiver since fixed sequences are used) and the symbols actually received. Based on this error signal, the crosstalk precompensator 73 is adapted to reduce the error, i.e. the difference between symbols sent and symbols received, by reducing the effect of crosstalk from the joining line to the vectored line, for example corresponding to any of the embodiments described above, i.e. either using intermediate vectors or directly calculating the FEXT couplings, or also based on embodiments described below in more detail.

The corresponding system in the upstream direction is shown in Fig. 6.

In Fig. 6, some of the components for data transfer in upstream direction of the communication system already discussed with reference to Fig. 5 are shown. On the side of customer premises equipment 84, symbols 50, 52 and 53 are transmitted via the lines, symbol 50 being transmitted via the joining line 55 and symbols 52 and 53 being transmitted via the vectored lines 56, 57. Again it should be noted that while only two vectored lines are depicted, they are intended to represent any arbitrary number of vectored lines. The symbols are modulated onto a plurality of carriers for each line corresponding to the already mentioned DMT modulation according to the VDSL2 standard used and transferred into time domain signals by inverse fast Fourier transformers 51, 53 and 54, respectively. The signals are then transmitted in the upstream direction via the respective lines 55, 56 and 57 which are in cable binder 58 to central office 59. Here, the received signals are sampled and transferred to the frequency domain via fast Fourier transformers 59, 60 and 61.

A crosstalk canceller 62 is used to cancel crosstalk occurring between the lines in cable binder 58. It should be noted that crosstalk canceller 62 may fully or partially be implemented using the same circuit elements as crosstalk precompensator 73, for example by using a common digital signal processor, but also may be implemented using separate elements. Similar to what has already been described for the receiver part of customer premises equipment 84 with reference to Fig. 5, in the receiver part of central office 59 shown in Fig. 6 frequency equalizers 63, 64, 91 followed by slicers 65, 66, 90 are provided to recover received symbols which in case of error free transmission correspond to symbols 52, 53, 50 originally sent.

Also Fig. 6 shows the situation where the crosstalk from the vectored lines to the joining lines is to be reduced. In this case, an error signal $e_j$ is determined based on the received symbols in the joining line, for example by slicer 90, wherein with an element 67 (which is not a mandatory element) the frequency equalization performed in element 91 is reversed. Based on the error signal $e_j$, the vectoring of crosstalk canceller 62 may then be adapted to cancel crosstalk from the lines of the vectored group to the joining lines, for example as already described above with reference to Figs. 1-4.

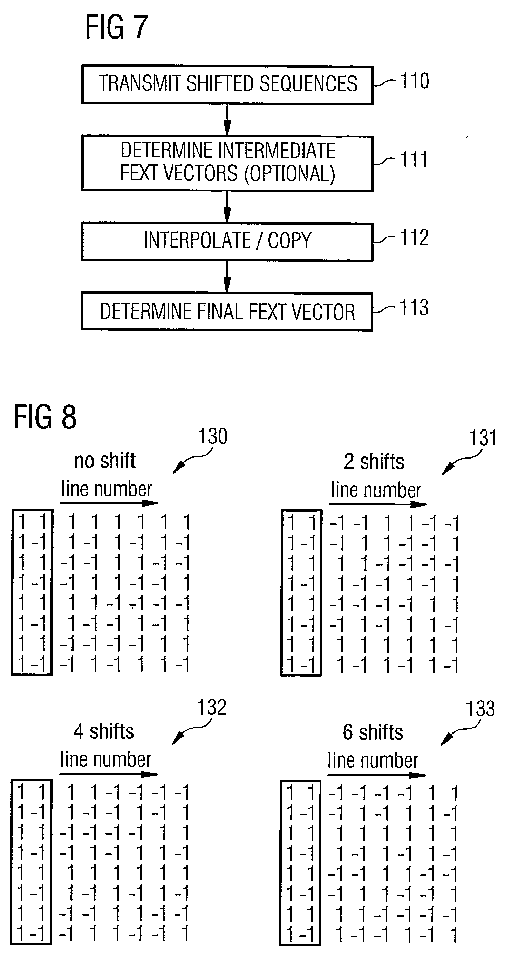

As already mentioned, in some embodiments where a plurality of communication channels is used for each communication connection, for example a plurality of carriers on each communication line in the embodiments of Figs. 5-6, in some embodiments sequences of pilot signals usable for vector training or adaptation, also referred to as training sequences hereinafter, are transmitted in a shifted manner for different carriers (tones). In other words, the start of the sequence assigned to a specific communication connection is shifted from one tone to the other. Such embodiments will now be explained in more detail with reference to Figs. 7-10.

In Fig. 7, a flow diagram of a method according to an embodiment is shown. The method of Fig. 7 may for example be implemented in the system of Figs. 5 and 6, but is not limited thereto, but may be generally employed in systems where a plurality of communication channels is used on each of a plurality of communication connections.

At 110, training sequences are transmitted which, as explained above, are shifted with respect to each other for different communication channels, for example different carriers or tones. This concept of shifting will now be explained using an example with reference to Fig. 8. As an example, Walsh-Hadamard sequences having a length of 8 are used in Fig. 8. Fig. 8 at a portion 130 shows the unshifted sequences. Each sequence is a column in Fig. 8, and as indicated by an arrow the sequences for different lines are adjacent to each other. At 131, the sequences are shown cyclically shifted by two elements.

At 132, the sequences are shown shifted by 4 elements, and at 133, the sequences are shifted by 6 elements. It should be noted that the shifted orthogonal sequences are still orthogonal to each other. In all cases, the first two sequences remain the same (the first sequence consists only of one which stays the same no matter how it is shifted, and the second sequence consists of alternating 1-1 which remains the same when shifted by 2, 4 or 6 elements).

Using the sequences of Fig. 8, for example a first channel may use the non-shifted sequences of 130, a second channel may use the sequences of 131, a third channel the sequences of 132, a fourth channel the sequences of 133, a fifth channel again the sequences of 130, etc. In other words, in an embodiment using the example of Fig. 8, communication channels like carriers or tones may be grouped into groups of four communication channels, wherein each of the communication channels within a group uses a different one of the sequences of 130-133. It should be noted that as evident from Fig. 8, in such an embodiment each communication connection, for example each line, still uses its specific sequence on all its communication channels, wherein this sequence is shifted for some of the channels.

In general, m communication channels may be assigned to a group, in which case for a length of the orthogonal sequence of n, the sequences may be shifted by n/m elements. For example, with the sequences shown in Fig. 8 m=4 and n=8, and the sequences are shifted by 2 elements from 130 to 131, from 131 to 132 and from 132 to 133. Using the Walsh-Hadamard sequence discussed so far, in such a case regardless of the "shifting" the first n/m sequences remain the same. In embodiments, m=4 or m=8 is selected, but other values are equally possible.

For example, in another embodiment, a system may comprise 250 lines, such that n=256 is chosen. m in such a system may be 8, and in such a case a shift by n/m=32 elements may be used from one communication channel to the next within a group. In such a system, the sequences for the first 32 communication connections, for example the first 32 lines, are unchanged.

It should be noted that while in the currently discussed embodiments the sequences are shifted by n/m elements, in other embodiments other shifts, for example also shifts by odd numbers, are possible.

In other words, for systems as described above, for the first n/m lines no shifting is needed, such that the shifting needs only to be employed when the number of active lines in the system exceeds n/m.

At 111, optionally intermediate FEXT vectors F already explained with reference to Figs. 1-4 are determined.

At 112, in order to be able to determine a **FEXT** vector, i.e. FEXT coupling coefficients, for a particular communication channel, either intermediate FEXT vectors or error values from other communication channels are copied or used for an interpolation. At 113, the final FEXT vector, i.e. the FEXT coupling coefficients, are determined using the result of 112 and optionally 111.

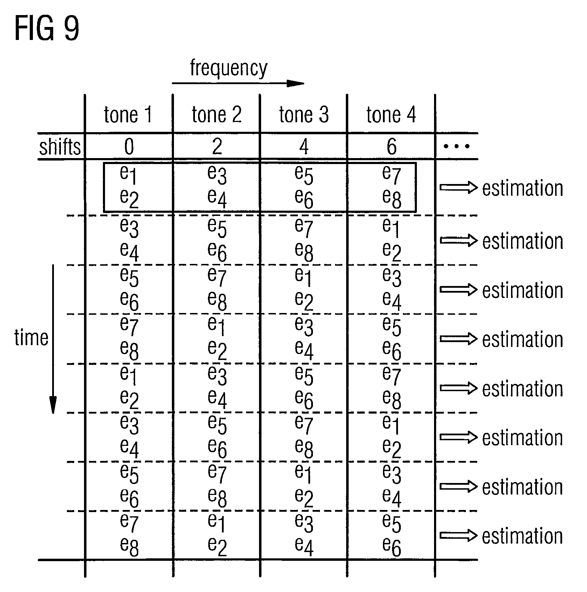

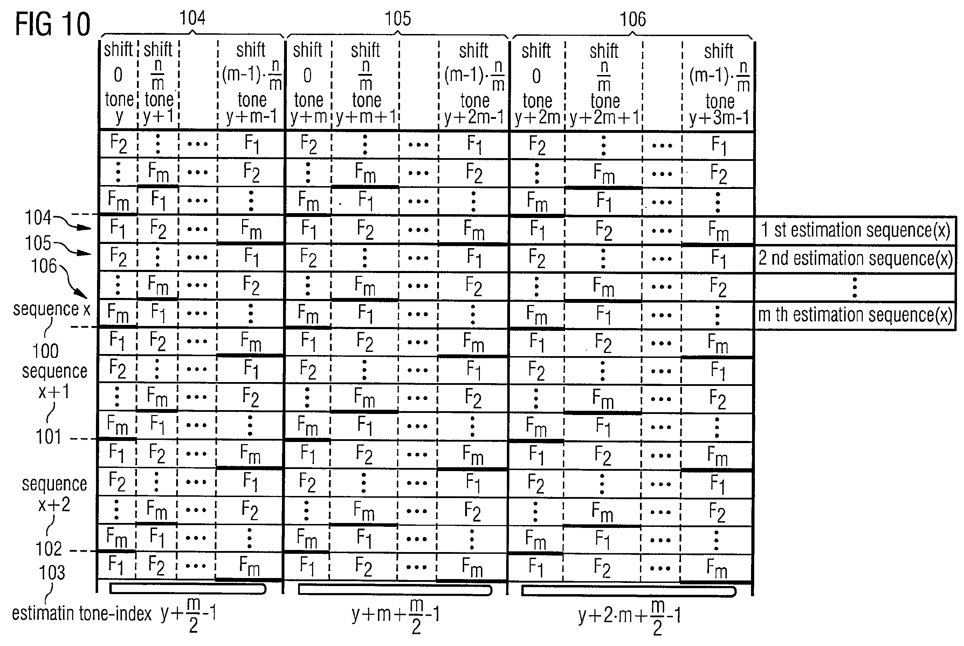

111-113 will now be further explained using simple examples with reference to Figs. 9 and 10. Fig. 9 is used for explaining a situation where 111 is not used, whereas Fig. 10 is used for explaining a situation where 111 is used. These examples are intended to illustrate some aspects of the embodiment of Fig. 7 and are not to be construed as limiting.

In Fig. 9, corresponding to the example in Fig. 8, a sequence length n=8 is assumed for illustration purposes. However, it is to be emphasized that other sequence lengths are equally possible. Moreover, again corresponding to Fig. 8, groups of four carriers or tones are used in the example of Fig. 9, corresponding to the columns labeled tone 1 to tone 4 in Fig. 9. For tone 1, a shift of 0 is applied corresponding to group 130 of Fig. 8, for tone 2 a shift of 2 elements corresponding to group 131 of Fig. 8 is applied, for tone 3 a shift of 4 elements corresponding to group 132 of Fig. 8 is applied, and for tone 4 a shift of 6 elements corresponding to group 133 is applied.

In Fig. 9, with $e_1$ the error signal based on the first element of the sequence is denoted, with $e_2$ the error based on the second element of the sequence etc. until $e_8$ which denotes an error based on the 8th and last element of the sequence. For example, $e_1$-$e_8$ may correspond to ej(1) to ej(8) of equation (1).

In a vertical direction in Fig. 9 as also indicated by an arrow the time is schematically shown. In a first time step, on tone 1 error signal $e_1$ pertaining to the first signals of the pilot signal sequences is obtained, after that on tone 1 signal $e_2$ is obtained etc. On tone 2, since here the sequences are shifted by 2 elements, first $e_3$ is obtained, then $e_4$ etc. On tone 3, corresponding to a shift of 4 elements, first $e_s$ is obtained, then $e_6$ is obtained etc. Finally, on tone 4 corresponding to a shift of 6 elements first $e_7$ is obtained, then $e_8$ is obtained etc.

As explained previously, for determining all FEXT couplings, for example in the form of the vector **FEXT,** a complete set of 8 error values, one for each element of the sequence, is required. In an embodiment, after the second time step, as can be seen in the example of Fig. 9 on tones 1-4 all together all 8 error values are present albeit for different tones. In an embodiment, an estimation of the FEXT vector is made based on these 8 error vector values. In such embodiments, it is used that for tones or carriers having adjacent frequencies, the crosstalk is often similar. As can be seen in Fig. 9, after a further two times step a further estimation can be made, etc.

In the example of Fig. 9, 8 error values of a group consisting of tone 1 to tone 4 are used for the estimation. In systems with a plurality of tones, as explained above, a plurality of such groups of m tones, 4 tones in the example of Fig. 9 are used. In such embodiments, instead of simply using the error value from the corresponding group (referred to as copy in 112 of Fig. 7), also an interpolation may be carried out. For example, in an embodiment for determining a value to be used for $e_3$ in the example of Fig. 9 for the estimation of tone 1, an interpolation between tone 2 shown and a tone 2 of a group of tones preceding the group shown (for example a group of 4 tones with lower frequencies than the one shown).

It should be noted that as shown in Fig. 9, this estimation after each two time steps can continue and for example be used to further adjust coupling coefficients for example based on equation (21). In other embodiments, this kind of estimation may be terminated after a predetermined time and be replaced by an estimation every eight time steps based only on error values for the specific tone.

As in Fig. 8, the specific values m=4 and n=8 in Fig. 9 serve only as an example for explaining some principles employed in some embodiments of the present invention, and other values may be used as well.

In the example of Fig. 9, no intermediate FEXT vectors are used, and the FEXT couplings are calculated directly based on the error values e. In another example, for example an embodiment using 111 of Fig. 7, intermediate vectors F as explained with respect to Figs. 1-4 are used. This will be explained using a diagram example shown in Fig. 10.

In the example of Fig. 10, m tones are provided in each group, wherein m may be equal to 4 as in Figs. 8 and 9, may be equal to 8 or may assume any other suitable number, for example a power of 2. The sequence length in Fig. 10 generally is n, and the shift between two adjacent tones in group is n/m. In Fig. 10, three groups 104, 105, 106 are shown, but it is to be noted that the number of tones is not particularly limited. The first tone in each group is assigned a shift of 0, the second tone in each group a shift of n/m etc. until the last tone in each group which is assigned a shift of (n-1)·n/m.

In the example of Fig. 10, in the first group 104 tones y to y+m-1 are grouped, in the second group tones y+m until tone y+2m-1 etc. In a line 103 a so-called "estimation tone index" is given which corresponds to a center tone in each of the groups.

Training sequences, i.e. sequences of pilot signals usable for vector training or adaptation, for example based on orthogonal Walsh-Hadamard sequences, are used as explained previously, of which three consecutive sequences 100 (sequence x), 101 (sequence x+1) and 102 (sequence x+2) are shown. The number of three sequences shown again serve merely as an example, and any desired number of sequences starting from a single sequence may be used.

At a beginning portion 104 of sequence 100, on tones y, y+m, y+2m etc., i.e. the first tone in each group, error values corresponding to the first n/m sequence elements are determined, on the second tone in each group error values pertaining to the second n/m sequence elements are determined etc. For example, for n=8 and m=2 as can be seen from Fig. 9 in 104 $e_1$ and $e_2$ would be determined for tone y, $e_3$ and $e_4$ would be determined for tone y+1 etc.

Based on these error values, intermediate vectors $\mathbf{F}_1$ to $\mathbf{F}_m$ are determined after n/m time steps, i.e. after the portion 104 of sequence x. This determination may be made for example based on equations (16) to (18), the vector $\mathbf{e}_{j,1}$ corresponding to the vector of the n/m error values determined for tone y, the vector $\mathbf{e}_{j,2}$ corresponding to the n/m error values determined for tone y+1 etc.

After portion 104 of sequence x has passed, vectors $\mathbf{F}_1$ to $\mathbf{F}_m$ are determined for each of groups 104-106, albeit for different tones. Similar to what was explained for Fig. 9, based on these m vectors $\mathbf{F}$ a first estimation of the vector **FEXT,** i.e. of the FEXT couplings, may be made based on equations (19) and (20). In this case, basically the values $\mathbf{F}$ are "copied" from the other tones to a specific tone of a group. In other embodiments, an interpolation may be performed. For example, to determine an $\mathbf{F}_2$ for estimating FEXT couplings for tone y+m, an interpolation may be made between $\mathbf{F}_2$ determined for tone y+m+1 and $\mathbf{F}_2$ determined for tone y+1. More complex interpolations using more values, for example additionally the value for tone y+2m+1 in the above example, are equally possible.

After portion 105 of sequence x, again m vectors $\mathbf{F}$ are determined for each group which may be used for a second estimation, etc., until after portion 106 an m-th estimation may take place.

Also in this case, the above scheme may be repeated and the vectoring may be adapted according to equation (21), or after some time, for example after sequences 100 and 101, a switch may be made to determining the FEXT coefficients for a specific tone based only on intermediate vectors for these tones. For example, the estimation indicated for sequence 100 may be continued for sequence 101, and then the next estimation may be made only after completion of sequence 102 based on $\mathbf{F}_1$ to $\mathbf{F}_m$ for each tone. In yet other embodiments, the grouping may be changed at one or more points in time. For example, in the embodiment represented by Fig. 10, at some point in time, for example after completion of a sequence like sequence 100, 101 or 102, the grouping of the tones may be changed. For example, the tones may be regouped such that tones y+m/2-1 to y+m+m/2-2, tones y+m+m/2-1 to y+2m+m/2-2 etc. form a group or, in other words, the tones which in Fig. 10 are at the "center" of a group are now at the border of the group. Other regroupings are also possible, for example the "group borders" shown in Fig. 10 may be shifted by a predetermined number of tones each time a predetermined time has passed, for example such that each tone is at or near the center of a group at some time. This regrouping in an embodiment is made for all communication connections of a vectored group.

In embodiments, information regarding the sequence shift explained above is exchanged between communication devices, for example between communication device 10 and communication devices 16-19 in Fig. 1. For example, if an additional line becomes active, a central office equipment, for example communication device 10 of Fig. 1 or communication device 69 of Figs. 5 and 6, may inform a downstream end, for example, communication devices 16-19, of a shift to be used.

The embodiments explained with reference to Figs. 7-10 may be used both in the downstream direction (as for example shown in Fig. 5) and in the upstream direction (as shown for example in Fig. 6). Moreover, while the situation where crosstalk from a plurality of lines in the vectored group to a joining line is to be cancelled has been used as an example, the above embodiments may also be used for cases where crosstalk from a joining line to vectored lines is cancelled. In this case, for example in Figs. 5 and 6 error values are determined at the lines already in the vectored group and used for adaptation of the vectoring. In still other embodiments, the two cases are handled jointly, i.e. error signals or values from all involved communication connections, both those in the vectored group and those joining, are used for adaptation of the vectoring.

Moreover, the above embodiments, i.e. calculating the FEXT coefficients based on intermediate vectors and the use of shifted sequences for earlier estimation, may not only be used when a communication connection joins a vectored group, but also during a so-called tracking where cross coupling coefficients are adapted or adjusted during data transmission to accommodate changing line conditions.

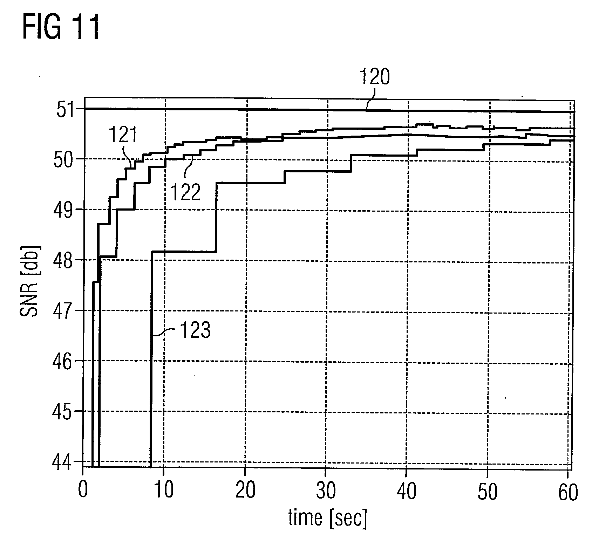

With embodiments like the ones discussed with reference to Figs. 7-10, a fast adaptation is possible. In this respect, Fig. 11 shows a simulation where the signal to noise ratio for a frequency of 5,2 MHz is shown over time for a simulated system of 99 active lines and a orthogonal sequence length n=128. A curve 120 shows the signal to noise ratio without crosstalk, i.e. the optimum which would be attainable with complete crosstalk cancellation or precompensation. Curve 123 shows the development after the start of the adaptation of the vectoring for a conventional system which does not use groupings of tones, but which determines a vector **FEXT** each time after a complete training sequence has been transmitted. Curve 121 shows the situation with m=8, i.e. 8 tones per group with shifted sequences (a shift of 16 elements in this case) and curve 122 shows the simulation result for 4 tones per group (a shift of 32 elements). As can be seen, with the grouping of some embodiments of the present invention a faster rise of the signal to noise ratio can be obtained, which in turn for example enables a joining line to become active faster.

It should be noted that the above-described embodiments serve only as examples, and a plurality of modifications or variations are possible without departing from the scope of the present invention. For example, while in Figs. 9 and 10 with increasing frequency a shift with regular intervals was used, in other embodiments the allocation of shift to the tones in a group may not be sequentially. For example, in an alternate embodiment in Fig. 9 tone 2 may be assigned a shift of 4 elements, tone 3 a shift of 2 elements and tone 4 a shift of 6 elements.

As many variations and alterations are possible as explained above, the scope of the present application is not to be limited by the above-described embodiments, but is intended to be limited only by the appended claims

## Claims

1. A method, comprising:

    transmitting a different sequence of pilot signals over each of a plurality of communication connections (12-15), each communication connection (12-15) comprising a plurality of communication channels,
    wherein said transmitting comprises transmitting, at the same time, the respective sequence on each communication channel of a communication connection,
    **characterized in that**
    the elements of the sequences for at least two communication channels of a communication connection are shifted in time with respect to each other.

2. The method of claim 1,
    wherein said transmitting comprises transmitting said sequences on grouped and/or regrouped communication channels and shifting sequences for transmission on communication channels within a group with respect to each other,
    wherein said sequences have a length of n elements, wherein each of said groups comprises m communication channels, and wherein sequences for communication channels within a group are shifted by n/m elements with respect to each other.

3. A method, comprising:

   obtaining a plurality of error values based on sequences of pilot signals transmitted according to any of claims 1 and 2, determining intermediate vectors, each intermediate vector being based on different ones of said error values, components of each of said intermediate vectors being linear combinations of crosstalk couplings between different communication connections, and

   determining crosstalk coupling between different communication connections based on linear combinations of said intermediate vectors, further comprising adapting a vectoring based on said crosstalk values.

4. An apparatus, comprising:

   a transmitter (69; 84) configured to transmit data via a plurality of communication channels of a communication connection (12-15) between the transmitter (69; 84) and a receiver (69; 84), wherein said transmitter is further configured to transmit, at the same time, a same sequence for vector training on each of said communication channels,

   **characterized in that**

   the elements of the sequences for at least two of said communication channels are shifted in time with respect to each other.

5. The apparatus of claim 4,
   wherein said transmitter is adapted to transmit sequences in a plurality of groups of communication channels and on communication channels within a group shifted with respect to each other.

6. The apparatus of claim 5,
   wherein said sequences have a length of n elements, wherein each of said group comprises m communication channels, and wherein sequences for communication channels within a group are shifted by n/m elements with respect to each other.

7. The apparatus of any of claims 4 to 6, further comprising a receiver to receive a shift magnitude characterizing a number of sequence elements by which said shifting is effected.

8. The apparatus of any of claims 4 to 7, comprising:

   at least one further transmitter (69; 84) configured to transmit data via a plurality of further communication channels of at least one further communication connection (12-15), wherein said at least one further transmitter is configured to transmit a same sequence for vector training on each of the further communication channels of each of said at least one further communication connection, wherein, for each of said at least one further communication connections, the sequence for at least two further communication channels is shifted with respect to each other,

   wherein said communication connection (12-15) and each of said at least one further communication connection (12-15) is assigned a different sequence for vector training.

9. The apparatus of any of claims 4 to 8,
   wherein said sequence is transmitted to provide vector training for at least one of the group consisting of reducing crosstalk from a joining communication connection to communication connections of a vectored group, reduce crosstalk from communication connections in a vectored group to a joining communication connection, and reduce crosstalk between communication connections of a vectored group.

10. An apparatus, comprising:

    a vectoring device (11) configured to reduce crosstalk between a plurality of communication connections (12-15), wherein said vectoring device is configured to determine crosstalk coupling between said communication connections (12-15), each communication connection (12-15) comprising a plurality of communication channels, wherein said vectoring device is further configured to adapt the vectoring based on a plurality of error values, each error value being indicative of a difference between a transmitted pilot signal and a received pilot signal, wherein said pilot signals are parts of the different sequences of pilot signals transmitted according to any of claims 1 and 2,

    wherein said error values are derived from different communication channels and comprise one error value for each element of said sequences.

**11.** The apparatus of claim 10,
wherein said vectoring device is configured to obtain a set of error values for a specific communication channel by interpolation.

**12.** The apparatus of claim 11,
wherein said vectoring device (11) is configured to determine a plurality of intermediate vectors, each intermediate vector being based on different ones of said plurality of error values, and to determine crosstalk couplings based on linear combinations of said intermediate vectors.

**13.** The apparatus of any of claims 10 to 12,
wherein said error values are derived from a communication connection to be added to a vectored group of communication connections.

**14.** The apparatus of any of claims 10 to 13,
further comprising a plurality of transmitters (69), each transmitter being coupled to one of said communication connections (12-15), wherein a different sequence of pilot signals is assigned to each of said communication connections, wherein each of said transmitters is configured to transmit the respective assigned sequence over all communication channels of its assigned communication connections with a shift between at least two sequences assigned to different communication channels of a communication connection.

**15.** The apparatus of any of claims 10 to 14,
further comprising a plurality of receivers (69), each receiver being coupled to one of said plurality of communication connections, wherein said apparatus is configured to receive shifted sequences of pilot signals on each of said communication connections, wherein said apparatus is configured to determine said plurality of error values based on said sequences.

**Patentansprüche**

**1.** Verfahren, umfassend:

Übertragen einer unterschiedlichen Abfolge von Pilotsignalen über jede einer Vielzahl von Kommunikationsverbindungen (12-15), wobei jede Kommunikationsverbindung (12-15) eine Vielzahl von Kommunikationskanälen umfasst,
wobei das Übertragen umfasst, die jeweilige Abfolge in jedem Kommunikationskanal einer Kommunikationsverbindung zur gleichen Zeit zu übertragen,
**dadurch gekennzeichnet, dass**
die Elemente der Abfolgen für mindestens zwei Kommunikationskanäle einer Kommunikationsverbindung in Bezug zueinander zeitlich verschoben sind.

**2.** Verfahren nach Anspruch 1,
wobei das Übertragen umfasst, die Abfolgen in gruppierten und/oder umgruppierten Kommunikationskanälen zu übertragen und Abfolgen für Übertragung in Kommunikationskanälen innerhalb einer Gruppe in Bezug aufeinander zu verschieben, wobei die Abfolgen eine Länge von n Elementen aufweisen, wobei jede der Gruppen m Kommunikationskanäle umfasst und wobei Abfolgen für Kommunikationskanäle innerhalb einer Gruppe um n/m Elemente in Bezug zueinander verschoben sind.

**3.** Verfahren, umfassend:

Erlangen einer Vielzahl von Fehlerwerten basierend auf Abfolgen von Pilotsignalen, die nach einem der Ansprüche 1 und 2 übertragen werden, Bestimmen von Zwischenvektoren, wobei jeder Zwischenvektor auf verschiedenen einen der Fehlerwerte basiert, wobei Komponenten jedes der Zwischenvektoren lineare Kombinationen von Übersprechkopplungen zwischen verschiedenen Kommunikationsverbindungen sind, und Bestimmen von Übersprechkopplungen zwischen verschiedenen Kommunikationsverbindungen basierend auf linearen Kombinationen der Zwischenvektoren, ferner umfassend, eine vektorisierte Datenübertragung basierend auf den Übersprechwerten anzupassen.

**4.** Vorrichtung, umfassend:

einen Sender (69; 84), konfiguriert zum Übertragen von Daten über eine Vielzahl von Kommunikationskanälen einer Kommunikationsverbindung (12-15) zwischen dem Sender (69; 84) und einem Empfänger (69; 84), wobei der Sender ferner konfiguriert ist, eine gleiche Abfolge für Vektortraining in jedem der Kommunikationskanäle zur gleichen Zeit zu übertragen,
**dadurch gekennzeichnet, dass**
die Elemente der Abfolgen für mindestens zwei der Kommunikationskanäle in Bezug aufeinander zeitlich verschoben sind.

**5.** Vorrichtung nach Anspruch 4,
wobei der Sender angepasst ist, Abfolgen in einer Vielzahl von Gruppen von Kommunikationskanälen und in Kommunikationskanälen innerhalb einer Gruppe, die in Bezug aufeinander verschoben sind, zu übertragen.

**6.** Vorrichtung nach Anspruch 5,
wobei die Abfolgen eine Länge von n Elementen aufweisen, wobei jede der Gruppe m Kommunikationskanäle umfasst und wobei Abfolgen für Kommunikationskanäle innerhalb einer Gruppe um n/m Elemente in Bezug zueinander verschoben sind.

**7.** Vorrichtung nach einem der Ansprüche 4 bis 6, ferner umfassend einen Empfänger zum Empfangen einer Verschiebungsgröße, die eine Anzahl von Abfolgeelementen, um die die Verschiebung bewirkt wird, charakterisiert.

**8.** Vorrichtung nach einem der Ansprüche 4 bis 7, umfassend:

mindestens einen weiteren Sender (69; 84) konfiguriert zum Übertragen von Daten über eine Vielzahl von weiteren Kommunikationskanälen mindestens einer weiteren Kommunikationsverbindung (12-15), wobei der mindestens eine weitere Sender konfiguriert ist, eine gleiche Abfolge für Vektortraining in jedem der weiteren Kommunikationskanäle jeder der mindestens einen weiteren Kommunikationsverbindung zu übertragen, wobei, für jede der mindestens einen weiteren Kommunikationsverbindungen, die Abfolge für mindestens zwei weitere Kommunikationskanäle in Bezug aufeinander verschoben ist,
wobei der Kommunikationsverbindung (12-15) und jeder der mindestens einen weiteren Kommunikationsverbindung (12-15) eine verschiedene Abfolge für Vektortraining zugewiesen ist.

**9.** Vorrichtung nach einem der Ansprüche 4 bis 8,
wobei die Abfolge übertragen wird, um Vektortraining für mindestens eines der Gruppe bereitzustellen, bestehend aus Reduzieren von Übersprechen von einer beitretenden Kommunikationsverbindung zu Kommunikationsverbindungen einer vektorisierten Gruppe, Reduzieren von Übersprechen von Kommunikationsverbindungen in einer vektorisierten Gruppe zu einer beitretenden Kommunikationsverbindung und Reduzieren von Übersprechen zwischen Kommunikationsverbindungen einer vektorisierten Gruppe.

**10.** Vorrichtung, umfassend:

eine Vektorvorrichtung (11), konfiguriert zum Reduzieren von Übersprechen zwischen einer Vielzahl von Kommunikationsverbindungen (12-15), wobei die Vektorvorrichtung konfiguriert ist, Übersprechkopplung zwischen den Kommunikationsverbindungen (12-15) zu bestimmen, wobei jede Kommunikationsverbindung (12-15) eine Vielzahl von Kommunikationskanälen umfasst,
wobei die Vektorvorrichtung ferner konfiguriert ist, die vektorisierte Datenübertragung basierend auf einer Vielzahl von Fehlerwerten anzupassen, wobei jeder Fehlerwert eine Differenz zwischen einem übertragenen Pilotsignal und einem empfangenen Pilotsignal angibt,
wobei die Pilotsignale Teile der verschiedenen Abfolgen von Pilotsignalen sind, die gemäß einem der Ansprüche 1 und 2 übertragen werden,
wobei die Fehlerwerte aus verschiedenen Kommunikationskanälen abgeleitet werden und für jedes Element der Abfolgen einen Fehlerwert umfassen.

**11.** Vorrichtung nach Anspruch 10,
wobei die Vektorvorrichtung konfiguriert ist, einen Satz von Fehlerwerten für einen spezifischen Kommunikationskanal durch Interpolation zu erlangen.

**EP 2 489 133 B1**

**12.** Vorrichtung nach Anspruch 11,
wobei die Vektorvorrichtung (11) konfiguriert ist, eine Vielzahl von Zwischenvektoren zu bestimmen, wobei jeder Zwischehvektor auf verschiedenen einen der Vielzahl von Fehlerwerten basiert, und Übersprechkopplungen basierend auf linearen Kombinationen der Zwischenvektoren zu bestimmen.

**13.** Vorrichtung nach einem der Ansprüche 10 bis 12,
wobei die Fehlerwerte aus einer Kommunikationsverbindung, die einer vektorisierten Gruppe von Kommunikationsverbindungen hinzuzufügen ist, abgeleitet sind.

**14.** Vorrichtung nach einem der Ansprüche 10 bis 13,
ferner umfassend eine Vielzahl von Sendern (69), wobei jeder Sender an eine der Kommunikationsverbindungen (12-15) gekoppelt ist, wobei eine verschiedene Abfolge von Pilotsignalen jeder der Kommunikationsverbindungen zugewiesen ist, wobei jeder der Sender konfiguriert ist, die jeweilige zugewiesene Abfolge über alle Kommunikationskanäle ihrer zugewiesenen Kommunikationsverbindungen mit einer Verschiebung zwischen mindestens zwei Abfolgen, die verschiedenen Kommunikationskanälen einer Kommunikationsverbindung zugewiesen sind, zu übertragen.

**15.** Vorrichtung nach einem der Ansprüche 10 bis 14,
ferner umfassend eine Vielzahl von Empfängern (69), wobei jeder Empfänger an eine der Vielzahl von Kommunikationsverbindungen gekoppelt ist, wobei jede Vorrichtung konfiguriert ist, verschobene Abfolgen von Pilotsignalen in jeder der Kommunikationsverbindungen zu empfangen, wobei die Vorrichtung konfiguriert ist, die Vielzahl von Fehlerwerten basierend auf den Abfolgen zu bestimmen.

**Revendications**

**1.** Procédé, comprenant :

la transmission d'une séquence différente de signaux pilotes sur chacune d'une pluralité de connexions de communication (12-15), chaque connexion de communication (12-15) comprenant une pluralité de canaux de communication,
dans lequel ladite transmission comprend la transmission, simultanément, de la séquence respective sur chaque canal de communication d'une connexion de communication,
**caractérisé en ce que**
les éléments des séquences d'au moins deux canaux de communication d'une connexion de communication sont mutuellement décalés dans le temps.

**2.** Procédé selon la revendication 1,
dans lequel ladite transmission comprend la transmissions desdites séquences sur des canaux de communication groupés et/ou regroupés et le décalage mutuel des séquences de transmission sur les canaux de communication dans un groupe,
dans lequel lesdites séquences ont une longueur de n éléments, dans lequel chacun desdits groupes comprend m canaux de communication, et
dans lequel les séquences des canaux de communication dans un groupe sont mutuellement décalées par n/m éléments.

**3.** Procédé, comprenant :

l'obtention d'une pluralité de valeurs d'erreurs basée sur des séquences de signaux pilotes transmis selon l'une quelconque des revendications 1 et 2,
la détermination de vecteurs intermédiaires, chaque vecteur intermédiaire étant basé sur des valeurs différentes desdites valeurs d'erreurs, des composants de chacun desdits vecteurs intermédiaires étant des combinaisons linéaires de couplages de diaphonie entre différentes connexions de communication, et
la détermination d'un couplage de diaphonie entre différentes connexions de communication d'après des combinaisons linéaires desdits vecteurs intermédiaires, comprenant en outre l'adaptation d'une vectorisation d'après lesdites valeurs de diaphonie.

**4.** Appareil, comprenant :

un émetteur (69 ; 84) configuré pour transmettre des données par l'intermédiaire d'une pluralité de canaux de communication d'une connexion de communication (12-15) entre l'émetteur (69 ; 84) et un récepteur (69 ; 84), dans lequel ledit émetteur est configuré en outre pour transmettre, simultanément, une même séquence d'apprentissage vectoriel sur chacun desdits canaux de communication,

**caractérisé en ce que**

les éléments des séquences d'au moins deux desdits canaux de communication sont mutuellement décalés dans le temps.

5. Appareil selon la revendication 4,
dans lequel ledit émetteur est adapté pour transmettre des séquences dans une pluralité de groupes de canaux communications et sur des canaux de communication dans un groupe mutuellement décalés.

6. Appareil selon la revendication 5,
dans lequel lesdites séquences ont une longueur de n éléments, dans lequel chacun desdits groupes comprend m canaux de communication, et
dans lequel les séquences des canaux de communication dans un groupe sont mutuellement décalées par n/m éléments.

7. Appareil selon l'une quelconque des revendications 4 a 6, comprenant en outre un récepteur pour recevoir une grandeur de décalage caractérisant un nombre d'éléments de séquence par lequel ledit décalage est effectué.

8. Appareil selon l'une quelconque des revendications 4 à 7, comprenant :

au moins un autre émetteur (69 ; 84) configuré pour transmettre des données par l'intermédiaire d'une pluralité d'autres canaux de communication d'au moins une autre connexion de communication (12-15), dans lequel ledit au moins un autre émetteur est configuré en outre pour transmettre une même séquence d'apprentissage vectoriel sur chacun des autres canaux de communication de chacune de ladite au moins une autre connexion de communication, dans lequel, pour chacune de ladite au moins une autre connexion de communication, les séquences d'au moins deux autres canaux de communication sont mutuellement décalées,
dans lequel ladite connexion de communication (12-15) et chacune de ladite au moins une autre connexion de communication (12-15) se voit assigner une séquence d'apprentissage vectoriel différente.

9. Appareil selon l'une quelconque des revendications 4 à 8,
dans lequel ladite séquence est transmise pour permettre un apprentissage vectoriel d'au moins l'une du groupe consistant en la réduction d'une diaphonie causée par une nouvelle connexion de communication aux connexions de communication d'un groupe vectorisé, la réduction de la diaphonie causée par des connexions de communication dans un groupe vectorisé à une nouvelle connexion de communication, et la réduction de la diaphonie entre des connexions du communication d'un groupe vectorisé.

10. Appareil, comprenant :

un dispositif de vectorisation (11) configuré pour réduire la diaphonie entre une pluralité de connexions de communication (12-15),
dans lequel ledit dispositif de vectorisation est configuré pour déterminer un couplage de diaphonie entre lesdites connexions de communication (12-15), chaque connexion de communication (12-15) comprenant une pluralité de canaux de communication, dans lequel ledit dispositif de vectorisation est configuré en outre pour adapter la vectorisation d'après une pluralité de valeurs d'erreurs, chaque valeur d'erreur étant indicative d'une différence entre un signal pilote émis et un signal pilote reçu,
dans lequel lesdits signaux pilotes font partie des différentes séquences de signaux pilotes émis selon l'une quelconque des revendications 1 et 2,
dans lequel lesdites valeurs d'erreurs sont dérivées de différents canaux de communication et comprennent une valeur d'erreur pour chaque élément desdites séquences.

11. Appareil selon la revendication 10,
dans lequel ledit dispositif de vectorisation est configuré pour obtenir un ensemble de valeurs d'erreurs pour un canal de communication spécifique par interpolation.

12. Appareil selon la revendication 11,

dans lequel ledit dispositif de vectorisation (11) est configuré pour déterminer une pluralité de vecteurs intermédiaires, chaque vecteur intermédiaire étant basé sur des valeurs différentes de ladite pluralité de valeurs d'erreurs, et déterminer des couplages de diaphonie d'après des combinaisons linéaires desdits vecteurs intermédiaires.

13. Appareil selon l'une quelconque des revendications 10 à 12,
dans lequel lesdites valeurs d'erreurs sont dérivées d'une connexion de communication à ajouter à un groupe vectorisé de connexions de communication.

14. Appareil selon l'une quelconque des revendications 10 à 13,
comprenant en outre une pluralité d'émetteurs (69), chaque émetteur étant couplé à l'une desdites connexions de communication (12-15), dans lequel une séquence différente de signaux pilotes est assignée à chacune desdites connexions de communication, dans lequel chacun desdits émetteurs est configuré pour émettre la séquence assignée respective sur tous les canaux de communication de ses connexions de communication assignées avec un décalage entre au moins deux séquences assignées à des canaux de communication différents d'une connexion de communication.

15. Appareil selon l'une quelconque des revendications 10 à 14,
comprenant en outre une pluralité de récepteurs (69), chaque récepteur étant couplé à l'une de ladite pluralité de connexions de communication, dans lequel ledit appareil est configuré pour recevoir des séquences décalées de signaux pilotes sur chacune desdites connexions de communication, ledit appareil étant configuré pour déterminer la pluralité de valeurs d'erreurs d'après lesdites séquences.

# FIG 1

# FIG 2

# FIG 3

DETERMINE INTERMEDIATE FEXT VECTORS ⌐ 35

DETERMINE FINAL FEXT VECTORS ⌐ 36

# FIG 4

40

orthogonal sequence x

$F_1$

$F_2$

$F_3$

$F_m$ ⟹ FEXT (x)

time

orthogonal sequence x+1

41

$F_1$

$F_2$

$F_3$

$F_m$ ⟹ FEXT (x+1)

$F_1$

$F_2$

FIG 5

EP 2 489 133 B1

FIG 6

## FIG 7

TRANSMIT SHIFTED SEQUENCES ⟿110

DETERMINE INTERMEDIATE FEXT VECTORS (OPTIONAL) ⟿111

INTERPOLATE / COPY ⟿112

DETERMINE FINAL FEXT VECTOR ⟿113

## FIG 8

no shift — 130
line number

2 shifts — 131
line number

4 shifts — 132
line number

6 shifts — 133
line number

# FIG 9

frequency →

| shifts | tone 1 | tone 2 | tone 3 | tone 4 | |
|---|---|---|---|---|---|
| | 0 | 2 | 4 | 6 | ... |
| | $e_1$ $e_2$ | $e_3$ $e_4$ | $e_5$ $e_6$ | $e_7$ $e_8$ | ⇒ estimation |
| | $e_3$ $e_4$ | $e_5$ $e_6$ | $e_7$ $e_8$ | $e_1$ $e_2$ | ⇒ estimation |
| | $e_5$ $e_6$ | $e_7$ $e_8$ | $e_1$ $e_2$ | $e_3$ $e_4$ | ⇒ estimation |
| | $e_7$ $e_8$ | $e_1$ $e_2$ | $e_3$ $e_4$ | $e_5$ $e_6$ | ⇒ estimation |
| | $e_1$ $e_2$ | $e_3$ $e_4$ | $e_5$ $e_6$ | $e_7$ $e_8$ | ⇒ estimation |
| | $e_3$ $e_4$ | $e_5$ $e_6$ | $e_7$ $e_8$ | $e_1$ $e_2$ | ⇒ estimation |
| | $e_5$ $e_6$ | $e_7$ $e_8$ | $e_1$ $e_2$ | $e_3$ $e_4$ | ⇒ estimation |
| | $e_7$ $e_8$ | $e_1$ $e_2$ | $e_3$ $e_4$ | $e_5$ $e_6$ | ⇒ estimation |

time ↓

# FIG 10

EP 2 489 133 B1

| | 104 | | | 105 | | | 106 | | |
|---|---|---|---|---|---|---|---|---|---|
| | shift 0 tone y | shift $\frac{n}{m}$ tone y+1 | shift $(m-1)\cdot\frac{n}{m}$ tone y+m-1 | shift 0 tone y+m | shift $\frac{n}{m}$ tone y+m+1 | shift $(m-1)\cdot\frac{n}{m}$ tone y+2m-1 | shift 0 tone y+2m | shift $\frac{n}{m}$ tone y+2m+1 | shift $(m-1)\cdot\frac{n}{m}$ tone y+3m-1 | |
| | $F_2$ | ⋮ · · · | $F_1$ | $F_2$ | ⋮ · · · | $F_1$ | $F_2$ | ⋮ · · · | $F_1$ | |
| | ⋮ | $F_m$ · · · | $F_2$ | ⋮ | $F_m$ · · · | $F_2$ | ⋮ | $F_m$ · · · | $F_2$ | |
| | $F_m$ | $F_1$ · · · | ⋮ | $F_m$ | $F_1$ · · · | ⋮ | $F_m$ | $F_1$ · · · | ⋮ | |
| 104 → | $F_1$ | $F_2$ · · · | $F_m$ | $F_1$ | $F_2$ · · · | $F_m$ | $F_1$ | $F_2$ · · · | $F_m$ | 1 st estimation sequence(x) |
| 105 → | $F_2$ | ⋮ · · · | $F_1$ | $F_2$ | ⋮ · · · | $F_1$ | $F_2$ | ⋮ · · · | $F_1$ | 2 nd estimation sequence(x) |
| 106 → | ⋮ | $F_m$ · · · | $F_2$ | ⋮ | $F_m$ · · · | $F_2$ | ⋮ | $F_m$ · · · | $F_2$ | ⋮ |
| sequence x | $F_m$ | $F_1$ · · · | ⋮ | $F_m$ | $F_1$ · · · | ⋮ | $F_m$ | $F_1$ · · · | ⋮ | m th estimation sequence(x) |
| 100 | $F_1$ | $F_2$ · · · | $F_m$ | $F_1$ | $F_2$ · · · | $F_m$ | $F_1$ | $F_2$ · · · | $F_m$ | |
| sequence x+1 | $F_2$ | ⋮ · · · | $F_1$ | $F_2$ | ⋮ · · · | $F_1$ | $F_2$ | ⋮ · · · | $F_1$ | |
| | ⋮ | $F_m$ · · · | $F_2$ | ⋮ | $F_m$ · · · | $F_2$ | ⋮ | $F_m$ · · · | $F_2$ | |
| 101 | $F_m$ | $F_1$ · · · | ⋮ | $F_m$ | $F_1$ · · · | ⋮ | $F_m$ | $F_1$ · · · | ⋮ | |
| | $F_1$ | $F_2$ · · · | $F_m$ | $F_1$ | $F_2$ · · · | $F_m$ | $F_1$ | $F_2$ · · · | $F_m$ | |
| sequence x+2 | $F_2$ | ⋮ · · · | $F_1$ | $F_2$ | ⋮ · · · | $F_1$ | $F_2$ | ⋮ · · · | $F_1$ | |
| | ⋮ | $F_m$ · · · | $F_2$ | ⋮ | $F_m$ · · · | $F_2$ | ⋮ | $F_m$ · · · | $F_2$ | |
| 102 | $F_m$ | $F_1$ · · · | ⋮ | $F_m$ | $F_1$ · · · | ⋮ | $F_m$ | $F_1$ · · · | ⋮ | |
| 103 | $F_1$ | $F_2$ · · · | $F_m$ | $F_1$ | $F_2$ · · · | $F_m$ | $F_1$ | $F_2$ · · · | $F_m$ | |

estimatin tone-index $y+\frac{m}{2}-1$    $y+m+\frac{m}{2}-1$    $y+2\cdot m+\frac{m}{2}-1$

# FIG 11

**EP 2 489 133 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040008760 A1
- US 20050175078 A1